# FASCICULE DE BREVET EUROPEEN

(11) **EP 2 268 589 B1**
(45) Date de publication et mention de la délivrance du brevet: **13.06.2018**
(21) Numéro de dépôt: 09742303.2
(22) Date de dépôt: 10.04.2009
(51) Int. Cl.: C03C 25/34, C03C 25/26, C08K 5/17, C09J 161/06, C09J 161/14, C09J 161/34

(54) **COMPOSITION D'ENCOLLAGE POUR FIBRES MINERALES ET PRODUITS RESULTANTS**
SCHLICHTUNGSZUSAMMENSETZUNG FÜR MINERALFASERN UND AUF DIESE WEISE GEWONNENE PRODUKTE
SIZING COMPOSITION FOR MINERAL FIBERS AND RESULTING PRODUCTS

(30) Priorité: 11.04.2008 FR 0802015
(43) Date de publication de la demande: 05.01.2011
(73) Titulaire: Saint-Gobain Isover, 92400 Courbevoie (FR)
(72) Inventeur: PONS Y MOLL, Olivier, 60600 Agnetz (FR); JAFFRENNOU, Boris, 75019 Paris (FR); DOUCE, Jérôme, 75010 Paris (FR)
(74) Mandataire: Saint-Gobain Recherche
(86) Numéro de dépôt international: PCT/FR2009/050653
(87) Numéro de publication internationale: WO 2009/136105

(56) Documents cités:
- EP-A- 1 522 554
- EP-A- 1 797 947
- WO-A-00/78836
- WO-A-01/26842
- WO-A-88/09323
- WO-A-98/53001
- WO-A-2007/060237
- WO-A-2008/043960
- WO-A-2008/043961
- GB-A- 1 284 568

## Description

L'invention se rapporte à une composition d'encollage à bas taux de formaldéhyde libre pour fibres minérales, notamment de verre ou de roche. La composition d'encollage comprend une résine obtenue par condensation de phénol, de formaldéhyde et d'amine en présence d'un catalyseur basique, et un piégeur de formaldéhyde.

L'invention concerne aussi les produits isolants à base de fibres minérales traitées par ladite composition d'encollage.

Les produits d'isolation à base de fibres minérales peuvent être formés à partir de fibres obtenues par différents procédés, par exemple selon la technique connue du fibrage centrifuge interne ou externe.

La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

La centrifugation externe consiste, elle, à déverser la matière en fusion à la surface périphérique externe d'organes rotatifs appelés rotors, d'où la fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, à la sortie du dispositif centrifuge, une composition d'encollage contenant une résine thermodurcissable. La nappe de fibres revêtues de l'encollage est soumise à un traitement thermique (à une température généralement supérieure à 100°C) afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage est le plus souvent pulvérisée sur les fibres. De manière générale, la composition d'encollage renferme la résine, qui se présente habituellement sous la forme d'une solution aqueuse, des additifs tels que de l'urée, des silanes, des huiles minérales, de l'ammoniaque et un catalyseur de polycondensation, et de l'eau.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement. L'aptitude à la pulvérisation est directement liée à la capacité que possède la résine à pouvoir être diluée dans une grande quantité d'eau et à rester stable dans le temps.

On caractérise l'aptitude à la dilution par la « diluabilité » que l'on définit comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000 %, à 20°C.

La préparation de la composition d'encollage est généralement effectuée au moment de l'emploi en mélangeant la résine et les additifs mentionnés précédemment. Il est important que la résine reste stable pendant un laps de temps donné avant d'être utilisée dans la composition d'encollage, notamment pendant au moins 8 jours à une température de l'ordre de 12 à 18°C et que sa diluabilité au terme de cette période soit supérieure ou égale à 1000 %, à 20°C, de préférence supérieure ou égale à 2000 % (diluabilité infinie).

Par ailleurs, les compositions d'encollage sont soumises à des dispositions réglementaires strictes qui font que la résine doit contenir - et générer lors de l'étape d'encollage ou ultérieurement lors de la cuisson du produit d'isolation - le moins possible de composés considérés comme pouvant nuire à la santé humaine ou à l'environnement.

Les résines thermodurcissables les plus couramment utilisées dans les compositions d'encollage sont des résines phénoliques appartenant à la famille des résols. Outre leur bonne aptitude à réticuler dans les conditions thermiques précitées, ces résines sont très solubles dans l'eau, possèdent une bonne affinité pour les fibres minérales, notamment en verre, et sont relativement peu coûteuses.

Ces résines sont obtenues par condensation de phénol et de formaldéhyde, en présence d'un catalyseur basique, dans un rapport molaire formaldéhyde/phénol généralement supérieur à 1 de manière à favoriser la réaction entre le phénol et le formaldéhyde et à diminuer le taux de phénol résiduel dans la résine.

Pour réduire la quantité de formaldéhyde résiduel, il est connu d'ajouter dans la résine une quantité suffisante d'urée qui réagit avec le formaldéhyde libre en formant des condensats urée-formaldéhyde (voir EP 0 148 050 A1). La résine obtenue renferme des condensats de phénol-formaldéhyde et d'urée-formaldéhyde, présente un taux de formaldéhyde libre et de phénol libre, exprimé en poids total de liquide, inférieur ou égal à 3 % et 0,5 %, respectivement, et a une diluabilité à l'eau au moins égale à 1000 %.

Si la quantité de phénol résiduel est acceptable, en revanche la quantité de formaldéhyde résiduel est trop élevée pour satisfaire les contraintes réglementaires actuelles.

En outre, il a été constaté que la résine n'est pas stable dans les conditions du traitement thermique auxquelles les fibres encollées sont soumises pour que la résine réticule et lie efficacement les fibres dans le produit isolant final. Aux températures habituelles mises en oeuvre dans l'étuve, en général supérieures à 100°C, les condensats urée-formaldéhyde sont dégradés et libèrent du formaldéhyde qui augmente les émissions de gaz indésirables dans l'atmosphère. Du formaldéhyde peut aussi être libéré à partir du produit final lors de son utilisation en tant qu'isolant thermique et/ou acoustique sous l'effet des variations thermiques, mais aussi hygrométriques, liées aux cycles climatiques.

Dans EP 0 480 778 A1, il a été proposé de substituer une partie de l'urée par une amine qui réagit avec le phénol et le formaldéhyde libres selon la réaction de Mannich pour former un produit de condensation ayant une stabilité thermique améliorée. Le taux de phénol et de formaldéhyde libres de cette résine est inférieur ou égal à 0,20 % et inférieur ou égal à 3 %, respectivement.

WO 2007/060237 divulgue des compositions de liant contenant une dispersion aqueuse d'une résine phénol-formaldéhyde et au moins une amine présente sous forme libre. La présente invention a pour but de proposer une composition d'encollage apte à être pulvérisée sur des fibres minérales qui comprend une résine phénolique liquide ayant un faible taux de formaldéhyde libre et un composé apte à réagir avec le formaldéhyde.

L'invention a plus généralement pour objet une composition résinique qui comprend une résine phénolique liquide ayant un faible taux de formaldéhyde libre et un composé apte à réagir avec le formaldéhyde. Cette composition résinique est destinée notamment à entrer dans la constitution de la composition d'encollage précitée.

Un autre objet de l'invention concerne les produits d'isolation thermique et/ou acoustique obtenus à partir des fibres minérales encollées avec la composition d'encollage précitée.

La résine liquide qui entre dans la constitution de la composition d'encollage conforme à l'invention présente un taux de formaldéhyde libre inférieur ou égal à 0,1 % en poids total de liquide, de préférence inférieur ou égal à 0,05 %.

Le taux de phénol libre de la résine est inférieur ou égal à 0,5 % en poids total de liquide, de préférence inférieur ou égal à 0,4 %.

La résine est une résine liquide qui contient essentiellement des condensats de phénol-formaldéhyde (P-F) et de phénol-formaldéhyde-monoéthanolamine (P-F-A). On entend ici que la partie « phénol » notée P des condensats peut être constituée par (i) du phénol, ou (ii) du phénol substitué par au moins un groupe fonctionnel (tels que halogéno-, nitro-, alkyl-), ou (iii) un groupement phénol, éventuellement substitué, porté par une molécule à longue chaîne, ou (iv) par un mélange de composés (i), (ii), (iii) précités.

La résine présente une diluabilité, mesurée à 20°C, au moins égale à 1000 %, de préférence supérieure ou égale à 1200 % et avantageusement supérieure ou égale à 1400 %.

La résine est stable thermiquement car elle est exempte de condensats urée-formaldéhyde (U-F) connus pour leur aptitude à se dégrader sous l'effet de la température. Les condensats P-F-A sont quant à eux stables dans les conditions précitées, notamment ils génèrent peu de formaldéhyde, en particulier lors du vieillissement du produit isolant final.

La résine telle que définie ci-dessus est obtenue selon un procédé qui consiste à faire réagir un phénol tel que défini précédemment, de préférence du phénol, et du formaldéhyde en présence d'un catalyseur basique, dans un rapport molaire formaldéhyde/phénol supérieur à 1, à refroidir le mélange réactionnel et à introduire dans ledit mélange réactionnel, au cours du refroidissement, l'amine qui réagit avec le formaldéhyde et le phénol libres selon la réaction de Mannich.

Dès l'introduction de l'amine, on interrompt le refroidissement et on maintient le mélange réactionnel à la température d'introduction pendant une durée qui varie de 10 à 120 minutes, et, après le refroidissement, on ajoute un acide en quantité suffisante pour que le pH de la résine soit inférieur à 7.

De préférence, on fait réagir le phénol et le formaldéhyde dans un rapport molaire formaldéhyde/phénol compris entre 2 et 4, ou avantageusement inférieur ou égal à 3, jusqu'à un taux de conversion du phénol supérieur ou égal à 93 %, et on commence à refroidir le mélange réactionnel. Le refroidissement intervient à un stade de la condensation qui correspond à une résine pouvant encore être diluée par de l'eau (diluabilité supérieure à 1000 %).

Par « taux de conversion du phénol », on entend le pourcentage de phénol ayant participé à la réaction de condensation avec le formaldéhyde par rapport au phénol de départ.

L'amine est ajoutée au cours du refroidissement, de manière progressive car la réaction avec le phénol et le formaldéhyde est exothermique, et la température au moment de l'ajout de l'amine est maintenue pendant la durée mentionnée plus haut, tout en veillant à ce que la diluabilité de la résine reste au moins égale à 1000 %.

L'amine est la monoéthanolamine.

L'introduction de l'amine est effectuée dès le début du refroidissement, à une température qui peut varier de 50 à 65°C, de préférence de l'ordre de 60°C.

La phase de maintien de la température permet de faire réagir l'amine avec la quasi-totalité du formaldéhyde présent dans le milieu réactionnel et par conséquent d'abaisser le taux de formaldéhyde libre dans la résine finale jusqu'à une valeur inférieure ou égale à 0,1 %.

Le maintien à la température mentionnée précédemment permet en outre de réduire le taux de phénol libre dans la résine, en particulier lorsque celle-ci est obtenue avec un rapport molaire formaldéhyde/phénol inférieur à 3. Le taux de phénol libre dans la résine est ainsi inférieur ou égal à 0,5 %.

La préparation de la résine a lieu selon un cycle de température qui comprend trois phases : une phase de chauffage, un premier palier de température et une phase de refroidissement.

Dans la première phase, on fait réagir du formaldéhyde et du phénol en présence d'un catalyseur basique en chauffant progressivement à une température comprise entre 60 et 75°C, de préférence à environ 70°C. Le rapport molaire formaldéhyde/phénol est supérieur à 1, de préférence varie de 2 à 4, et avantageusement inférieur ou égal à 3.

Le catalyseur peut être choisi parmi les catalyseurs connus de l'homme du métier, par exemple la triéthylamine, la chaux CaO et les hydroxydes de métaux alcalins ou alcalino-terreux, par exemple les hydroxydes de sodium, de potassium, de calcium ou de baryum. L'hydroxyde de sodium est préféré.

La quantité de catalyseur varie de 2 à 15 % en poids par rapport au poids de phénol de départ, de préférence de 5 à 9 %, et avantageusement de 6 à 8%.

Dans la deuxième phase, la température du mélange réactionnel qui est atteinte après le chauffage du mélange réactionnel (fin de première phase) est maintenue jusqu'à ce que le taux de conversion du phénol soit au moins égal à 93 %.

La troisième phase est une phase de refroidissement au cours de laquelle on introduit l'amine dans le mélange réactionnel afin de commencer la réaction avec le formaldéhyde et le phénol résiduels et former ainsi les condensats P-F-A.

L'addition de l'amine a lieu progressivement à cause du caractère exothermique de la réaction comme indiqué précédemment, et peut par exemple être effectuée à raison de 1 à 5 % en poids par minute de la quantité totale d'amine, de préférence 2 à 4 %.

La quantité d'amine, en particulier d'alcanolamine, est ajoutée à raison de 0,2 à 0,7 mole d'amine par mole de phénol de départ, de préférence 0,25 à 0,5 mole.

La durée de l'ajout de l'amine peut varier de 10 à 120 minutes, de préférence de 20 à 100 minutes, et avantageusement de 25 à 50 minutes.

De préférence, l'ajout de l'amine s'effectue à une température comprise entre 50 et 65°C, et avantageusement de l'ordre de 60°C.

Après l'ajout de l'amine, on effectue un palier de température en maintenant la température de fin d'introduction pendant 10 à 120 minutes, de préférence au moins 15 minutes, de manière à poursuivre la réaction de condensation du formaldéhyde et du phénol avec l'amine jusqu'à un stade plus avancé et réduire encore la quantité de formaldéhyde et de phénol libres, la diluabilité de la résine, mesurée à 20°C, devant être maintenue au moins égale à 1000 %.

Après la formation des condensats P-F-A, on refroidit le mélange réactionnel pour que sa température atteigne 20 à 25°C environ et on le neutralise afin d'arrêter les réactions de condensation.

La neutralisation du mélange réactionnel est effectuée par l'ajout d'un acide jusqu'à l'obtention d'un pH inférieur à 7, de préférence inférieur à 6, avantageusement supérieur à 4 et mieux encore de l'ordre de 5. L'acide est choisi parmi l'acide sulfurique, l'acide sulfamique, l'acide phosphorique et l'acide borique. L'acide sulfurique et l'acide sulfamique sont préférés.

Le composé apte à réagir avec le formaldéhyde est choisi dans le groupe constitué de la 2,4-pentanedione, la 2,4-hexanedione, la 3,5-heptanedione, la 2,4-octanedione, l'acétoacétamide, l'acide acétoacétique, le méthylacétoacétate, l'éthylacétoacétate, le n-propylacétoacétate, l'iso-propylacétoacétate, l'iso-butylacétoacétate, le t-butylacétoacétate, le n-hexylacétoacétate, le malonamide, l'acide malonique, le diméthylmalonate, le diéthylmalonate, le di-n-propylmalonate, le di-iso-propylmalonate, le di-n-butyl-malonate , l'acide acétonedicarboxylique et le diméthylacétonedicarboxylate, le 2-méthylcyanoacétate, le 2-éthylcyanoacétate, le 2-n-propylcyanoacétate, le 2-iso-propylcyanoacétate, le 2-n-butylcyanoacétate, le 2-iso-butylcyanoacétate, le 2-ter-butylcyanoacétate, le 2-cyanoacétamide et le propanedinitrile, le triméthylolpropane triacétoacétate, le triméthylolpropane tricyanoacétate, la 1,3-cyclohexanedione et l'acide de Meldrum,

Les composés à méthylène(s) actif(s) répondent aux formules suivantes : 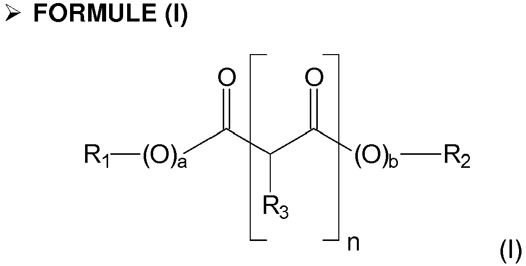 dans laquelle :
- R₁ et R₂, identiques ou différents, représentent un atome d'hydrogène, un radical alkyle en C₁-C₂₀, de préférence C₁-C₆, un radical amino ou un radical de formule 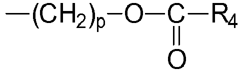 dans laquelle R₄ représente un radical 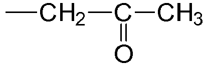 ou 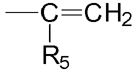 où R₅ = H ou -CH₃
   et p est un nombre entier variant de 1 à 6
- R₃ représente un atome d'hydrogène, un radical alkyle en C₁-C₁₀, un radical phényle ou un atome d'halogène
- a est égal à 0 ou 1
- b est égal à 0 ou 1
- n est égal à 1 ou 2

Les composés de formule (I) selon l'invention sont :
- la 2,4-pentanedione :
   R₁ = -CH₃ ; R₂ = -CH₃ ; R₃ = H ; a = 0; b = 0 ; n = 1
- la 2,4-hexanedione :
   R₁ = -CH₂-CH₃ ; R₂ = -CH₃ ; R₃ = H ; a = 0 ; b = 0 ; n = 1
- la 3,5-heptanedione
   R₁ = -CH₂-CH₃ ; R₂ = -CH₂-CH₃ ; R₃ = H ; a = 0 ; b = 0 ; n = 1
- la 2,4-octanedione :
   R₁ = -CH₃ ; R₂ = -(CH₂)₃-CH₃ ; R₃ = H ; a = 0 ; b = 0 ; n = 1
- l'acétoacétamide :
   R₁ = -CH₃ ; R₂ = -NH₂ ; R₃ = H ; a = 0 ; b = 0 ; n = 1
- l'acide acétoacétique :
   R₁ = -CH₃ ; R₂ = H ; R₃ = H ; a = 0 ; b = 1 ; n = 1
- le méthylacétoacétate :
   R₁ =-CH₃ ; R₂ = -CH₃ ; R₃ = H ; a = 0 ; b= 1 ; n= 1
- l'éthylacétoacétate :
   R₁ = -CH₃ ; R₂ = -CH₂-CH₃ ; R₃ = H ; a = 0 ; b = 1 ; n = 1
- le n-propylacétoacétate :
   R₁ = -CH₃ ; R₂ = -(CH₂)₂-CH₃ ; R₃ = H ; a = 0 ; b = 1 ; n = 1
- l'iso-propylacétoacétate :
   R₁ = -CH₃ ; R₂ = -CH(CH₃)₂ ; R₃ = H ; a = 0 ; b = 1 ; n = 1
- l'iso-butylacétoacétate :
   R₁ = -CH₃ ; R₂ = -CH₂-CH(CH₃)₂ ; R₃ = H ; a = 0 ; b = 1 ; n = 1
- le t-butylacétoacétate :
   R₁ = -CH₃ ; R₂ = -C(CH₃)₃ ; R₃ = H ; a = 0 ; b = 1 ; n = 1
- le n-hexylacétoacétate :
   R₁ = -CH₃ ; R₂ = -(CH₂)₅-CH₃ ; R₃ = H ; a = 0 ; b = 1 ; n = 1
- le malonamide :
   R₁ = -NH₂ ; R₂ = -NH₂ ; R₃ = H ; a = 0 ; b = 0 ; n = 1
- l'acide malonique :
   R₁ = H ; R₂ = H ; R₃ = H ; a = 1 ; b = 1 ; n = 1
- le diméthylmalonate :
   R₁ = -CH₃ ; R₂ = -CH₃ ; R₃ = H ; a = 1 ; b = 1 ; n = 1
- le diéthylmalonate :
   R₁ = -CH₂-CH₃ ; R₂ = -CH₂-CH₃ ; R₃ = H ; a = 1 ; b = 1 ; n = 1
- le di-n-propylmalonate :
   R₁ = -(CH₂)₂-CH₃ ; R₂ = -(CH₂)₂-CH₃ ; R₃ = H ; a = 1 ; b = 1 ; n = 1
- le di-iso-propylmalonate :
   R₁ = -CH(CH₃)₂ ; R₂ = -CH(CH₃)₂ ; R₃ = H ; a = 1 ; b = 1 ; n = 1
- le di-n-butylmalonate :
   R₁ = -(CH₂)₃-CH₃ ; R₂ = -(CH₂)₃-CH₃ ; R₃ = H ; a = 1 ; b = 1 ; n = 1
- l'acide acétonedicarboxylique :
   R₁ = H ; R₂ = H ; R₃ = H ; a = 1 ; b = 1 ; n = 2
- le diméthylacétonedicarboxylate :
   R₁ = -CH₃ ; R₂ = -CH₃ ; R₃ = H ; a = 1 ; b = 1 ; n = 2. 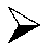
   **FORMULE (II)**

   R₆-CHR₇-C≡N (II)

   dans laquelle
   - R₆ représente un radical cyano ou un radical 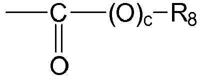 dans lequel :
      - R₈ représente un atome d'hydrogène, un radical alkyle en C₁-C₂₀, de préférence C₁-C₆, ou un radical amino
      - c est égal à 0 ou 1
   - R₇ représente un atome d'hydrogène, un radical alkyle en C₁-C₁₀, un radical phényle ou un atome d'halogène.

Les composés de formule (II) selon l'invention sont :
- le 2-méthylcyanoacétate :
   R₆ = -CO-O-CH₃ ; R₇ = H
- le 2-éthylcyanoacétate :
   R₆ = -CO-O-CH₂-CH₃ ; R₇ = H
- le 2-n-propylcyanoacétate :
   R₆ = -CO-O-(CH₂)₂-CH₃ ; R₇ = H
- le 2-iso-propylcyanoacétate :
   R₆ = -CO-O-CH(CH₃)₂ ; R₇ = H
- le 2-n-butylcyanoacétate :
   R₆ = -CO-O-(CH₂)₃CH₃ ; R₇ = H
- le 2-iso-butylcyanoacétate :
   R₆ = -CO-O-CH₂-CH(CH₃)₂ ; R₇ = H
- le 2-ter-butylcyanoacétate :
   R₆ = -CO-O-C(CH₃)₃ ; R₇ = H
- le 2-cyanoacétamide :
   R₆ = -CO-NH₂ ; R₅ = H
- le propanedinitrile :
   R₆ = -C≡N ; R₅ = H 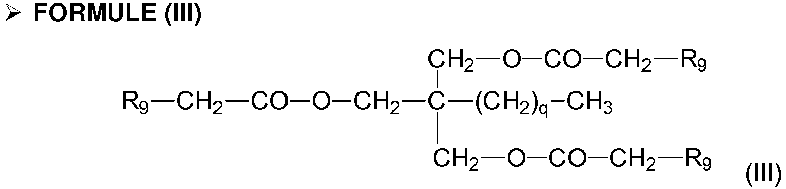 dans laquelle
   - R₉ représente un radical -C≡N ou -CO-CH₃
   - q est un nombre entier variant de 1 à 4.

Les composés de formule (III) selon l'invention sont :
- le triméthylolpropane triacétoacétate :
   R₉ = -CO-CH₃ ; q = 1
- le triméthylolpropane tricyanoacétate :
   R₉ =-C≡N ; q = 1 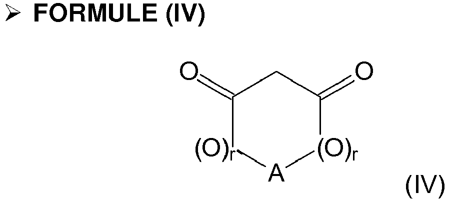 dans laquelle
   - A représente un radical -(CH₂)₃- ou -C(CH₃)₂-
   - r est égal à 0 ou 1

Les composés de formule (IV) préférés sont :
- la 1,3-cyclohexanedione :
   A = -(CH₂)₃ ; r = 0
- l'acide de Meldrum :
   A = -C(CH₃)₂- ; r = 1.

La composition d'encollage peut comprendre en outre 0 à 40 parts d'urée pour 100 parts en poids sec du mélange constitué par la résine et l'urée.

Dans la composition d'encollage, la teneur en composé apte à réagir avec le formaldéhyde représente 1 à 35 parts pour 100 parts en poids sec de résine liquide et le cas échéant d'urée, de préférence 1 à 30 parts, avantageusement est inférieure ou égale à 20 parts, par exemple de 3 à 20 parts et notamment est inférieure ou égale à 15 parts.

D'une manière générale, la composition d'encollage comprend encore les additifs suivants, pour 100 parts en poids sec de résine et le cas échéant d'urée :
- 0 à 10 parts d'un catalyseur de polycondensation, par exemple le sulfate d'ammonium, de préférence moins de 7 parts,
- 0 à 2 parts de silane, en particulier un aminosilane,
- 0 à 20 parts d'huile, de préférence 6 à 15 parts,
- 0 à 20 parts d'ammoniaque (solution à 20 % en poids), de préférence moins de 12 parts.

Le rôle des additifs est connu et brièvement rappelé : l'urée permet d'ajuster le temps de gel de la composition d'encollage afin d'éviter d'éventuels problèmes de prégélification ; le sulfate d'ammonium sert de catalyseur de polycondensation (dans l'étuve à chaud) après la pulvérisation de la composition d'encollage sur les fibres ; le silane est un agent de couplage entre les fibres et la résine, et joue également le rôle d'agent anti-vieillissement ; les huiles sont des agents anti-poussières et hydrophobes ; l'ammoniaque joue, à froid, le rôle de retardateur de polycondensation.

La composition d'encollage peut être préparée de manière extemporanée, pour une application immédiate sur les fibres minérales, en mélangeant les différents constituants.

La préparation de la composition d'encollage peut aussi être réalisée en utilisant une composition résinique que l'on peut appeler pré-mélange (ou « prémix ») contenant la résine et le composé apte à réagir avec le formaldéhyde, éventuellement de l'urée, à laquelle on ajoute les autres additifs. La composition résinique présente une meilleure stabilité que la résine seule, ce qui permet de maintenir la diluabilité à un niveau compatible avec les conditions d'application sur les fibres minérales pendant un temps de stockage plus important.

Les exemples qui suivent permettent d'illustrer l'invention sans toutefois la limiter.

Dans les exemples, on utilise les méthodes d'analyse suivantes :
- la quantité de phénol libre est mesurée par chromatographie en phase gazeuse utilisant une colonne remplie (phase stationnaire : Carbowax 20 M) et un détecteur à ionisation de flamme (FID),
- la quantité de formaldéhyde libre est mesurée par chromatographie haute performance (HPLC) et réaction post-colonne dans les conditions de la norme ASTM D 5910-96 modifiées en ce que la phase mobile est de l'eau tamponnée à pH 6,8, que la température du four est égale à 90°C et que la détection est effectuée à 420 nm,
- les émissions de formaldéhyde venant d'un produit d'isolation à base de laine de verre sont mesurées dans les conditions des normes ISO 16000 et EN 13419. La mesure du formaldéhyde émis est effectuée après 3 jours de test à une température de 23°C et sous une humidité relative de 50 %.

### EXEMPLE 1

Dans un réacteur de 2 litres surmonté d'un condenseur et équipé d'un système d'agitation, on introduit 378 g de phénol (4 moles) et 809 g de formaldéhyde (10 moles) en solution aqueuse à 37% (rapport molaire formaldéhyde/phénol égal à 2,5) et on chauffe le mélange à 45°C sous agitation.

On ajoute régulièrement en 30 minutes 52,7 g de soude en solution aqueuse à 50 % (soit 7 % en poids par rapport au phénol), puis on élève la température progressivement à 70°C en 30 minutes et on la maintient pendant 80 minutes de manière à atteindre un taux de conversion du phénol égal à 93 %.

Ensuite, on diminue la température à 60°C en 30 minutes et simultanément on introduit dans le mélange réactionnel, de manière régulière, 75,3 g de monoéthanolamine (1,2 mole). On maintient la température à 60°C pendant 15 minutes, on refroidit le mélange jusqu'à 25°C environ en 30 minutes et on ajoute de l'acide sulfamique en solution à 15 %, en 60 minutes, jusqu'à ce que le pH soit égal à 5,0.

La résine obtenue a l'aspect d'une composition aqueuse limpide : elle présente un taux de formaldéhyde libre égal à 0,05 %, un taux de phénol libre égal à 0,2 % (les taux étant exprimés en poids total de liquide) et une diluabilité supérieure à 2000 %.

On ajuste la teneur pondérale en matières solides de la résine liquide à 50 % avec de l'eau, et on ajoute de l'urée (20 parts en poids pour 80 parts en poids sec de la résine liquide). Le mélange est conservé à 12°C pendant 7 jours. Ce mélange est appelé composition résinique de référence 1.

### APPLICATION A LA PREPARATION D'UN ENCOLLAGE

### a) préparation et utilisation de l'encollage

On prépare une composition d'encollage en mélangeant 100 parts en poids sec du mélange précité de résine et d'urée, 10 parts en poids d'acétoacétamide, 3 parts de sulfate d'ammonium, 1 part de silane (Silquest® A-1100 commercialisé par OSI) et 8 parts d'une huile minérale.

Cette composition d'encollage est utilisée pour fabriquer un produit isolant à base de laine minérale. De manière classique, la composition d'encollage est pulvérisée sur des fibres de verre à la sortie du dispositif de fibrage à raison de 4,5 % en poids sec d'encollage par rapport au poids des fibres. Les fibres encollées sont collectées sur un convoyeur à bande où elles forment un matelas de laine de verre qui est ensuite soumis à un traitement thermique dans une étuve de manière à obtenir une température minimale de 200°C au coeur du produit.

Le produit isolant final a une épaisseur nominale de 200 mm et une densité nominale de 11 kg/m³.

### a') préparation d'un produit comparatif

Le produit comparatif est fabriqué avec une composition d'encollage en tous points identiques mais ne contenant pas d'acétoacétamide, tous les autres paramètres de fabrication du produit étant égaux par ailleurs.

### b) mesure des émissions de formaldéhyde

Les émissions de formaldéhyde générées par le produit obtenu avec la composition d'encollage selon l'invention sont divisées par trois par rapport aux émissions de formaldéhyde émises par le produit comparatif.

### c) mesure de stabilité de l'encollage

On prépare une composition d'encollage simplifié en mélangeant la composition résinique de référence 1 avec de l'acétoacétamide à raison de 100 parts en poids sec de résine et d'urée pour 10 parts en poids d'acétoacétamide.

Le tableau 1 rassemble les mesures de la diluabilité de la composition d'encollage selon l'invention (avec acétoacétamide) et de la composition résinique de référence (sans acétoacétamide) après une période de stockage de 3, 6, 9 et 12 jours à 8°C et 12°C.

**Tableau 1**

| | Composition d'encollage selon l'invention | Composition résinique de référence |
|---|---|---|
| 8°C | | |
| 0 jour | ≥ 2000 % | ≥ 2000 % |
| 3 jours | ≥ 2000 % | 1800 % |
| 6 jours | ≥ 2000 % | 1600 % |
| 9 jours | ≥ 2000 % | 1300 % |
| 12 jours | 1700 % | 1200 % |
| 12°C | | |
| 0 jour | ≥ 2000 % | ≥ 2000 % |
| 3 jours | ≥ 2000 % | 1600 % |
| 6 jours | 2000 % | 1200 % |
| 9 jours | 1400 % | 800 % |
| 12 jours | 1100 % | 600 % |

### EXEMPLES 2 A 8

On prépare une résine liquide dans les conditions de l'exemple 1 modifiées en ce que la teneur en matières solides de la résine est ajustée à 43,6 %.

20 parts en poids d'urée sont ajoutées à 80 parts en poids sec de la résine pour obtenir une composition résinique de référence 2, laquelle a une diluabilité supérieure à 2000 %. La composition résinique de référence 2 est conservé dans des conditions simulant un vieillissement au stockage qui conduisent à une diminution de la diluabilité.

On prépare alors des compositions d'encollage contenant 100 parts en poids sec du mélange de résine et d'urée et une quantité variable (10 ou 20 parts en poids) d'un composé apte à réagir avec le formaldéhyde suivant :
- Acétoacétamide : exemple 2
- Ethylacétoacétate : exemple 3
- Acide malonique : exemple 4
- Diméthylmalonate : exemple 5
- Malonamide : exemple 6
- Acide acétonedicarboxylique : exemple 7
- Diméthylacétonedicarboxylate : exemple 8

Le tableau 2 rassemble les valeurs de la diluabilité des compositions d'encollage et de la composition résinique ne contenant pas de composé apte à réagir avec le formaldéhyde (Référence 2) mesurées 24 heures après la préparation des encollages, toutes les compositions (encollage et référence) ayant été conservées à 23°C.

**Tableau 2**

| | Nombre de parts | Diluabilité |
|---|---|---|
| Ex. 2 | 10 | 1000 % |
| | 20 | 1200 % |
| Ex. 3 | 10 | 1000 % |
| | 20 | 1200 % |
| Ex. 4 | 10 | 1900 % |
| | 20 | 1800 % |
| Ex. 5 | 10 | 1000 % |
| | 20 | 1200 % |
| Ex. 6 | 10 | 1000 % |
| | 20 | 1200 % |
| Ex. 7 | 10 | 1900 % |
| | 20 | 1900 % |
| Ex. 8 | 10 | 1000 % |
| | 20 | 1400 % |
| Référence | - | 900 % |

L'ajout d'un composé apte à réagir avec le formaldéhyde permet d'accroître la diluabilité de la composition d'encollage jusqu'à un niveau compatible avec les conditions d'application sur les fibres minérales (diluabilité au moins égale à 1000 %).

### EXEMPLES 9 A 14

On prépare une résine liquide dans les conditions de l'exemple 1.

A 80 parts en poids sec de la résine, on ajoute 20 parts en poids d'urée pour obtenir une composition résinique.

On prépare deux séries de compositions d'encollage contenant 100 parts en poids sec de la composition résinique et une quantité variable (11,1 parts (série a) ou 31,6 parts (série b) en poids sec) d'un composé apte à réagir avec le formaldéhyde suivant :
- Acétoacétamide : exemple 9
- Ethylacétoacétate : exemple 10
- Diméthylacétonedicarboxylate : exemple 11
- Dihydrazide d'acide adipique : exemple 12 (hors invention)
- Ethylèneurée : exemple 13 (hors invention)
- Bisulfite de sodium : exemple 14 (hors invention)

Les compositions d'encollage de la série a et de la série b présentent une teneur en matières solides égale à 35,8 % et 27,5 %, respectivement.

Pour chaque série, on prépare une composition résinique ne contenant pas d'agent apte à réagir avec le formaldéhyde qui a une teneur identique en matières solides (Références a et b).

Les compositions d'encollage et les compositions résiniques sont stockées à 12°C et leur diluabilité à l'eau est mesurée à différentes échéances.

**Série a :**

| | Ex. 9 | Ex. 10 | Ex. 11 | Ex. 12 | Ex. 14 | Réf. a |
|---|---|---|---|---|---|---|
| Nbre de parts | 11,1 | 11,1 | 11,1 | 11,1 | 11,1 | - |
| Diluabilité | | | | | | |
| 2 jours | ≥ 2000 % | ≥ 2000 % | ≥ 2000 % | ≥ 2000 % | ≥ 2000 % | ≥ 2000 % |
| 28 jours | 800 % | ≥ 2000 % | 1000 % | ≥ 2000 % | 1400 % | 500 % |

**Série b :**

| | Ex. 9 | Ex. 10 | Ex. 11 | Ex. 12 |
|---|---|---|---|---|
| Nbre de parts | 31,6 | 31,6 | 31,6 | 31,6 |
| Diluabilité | | | | |
| 8 jours | ≥ 2000 % | ≥ 2000 % | ≥ 2000 % | ≥ 2000 % |
| 34 jours | 1000 % | ≥ 2000 % | 1000 % | ≥ 2000 % |

| | Ex. 13 | Ex. 14 | Réf. b |
|---|---|---|---|
| Nbre de parts | 31,6 | 31,6 | - |
| Diluabilité | | | |
| 8 jours | ≥ 2000 % | ≥ 2000 % | ≥ 2000 % |
| 34 jours | 900 % | ≥ 2000 % | 200 % |

## Revendications

1. Composition d'encollage pour fibres minérales contenant :
- une résine phénolique liquide constituée de condensats de phénol-formaldéhyde et de phénol-formaldéhyde-monoéthanolamine, ladite résine phénolique liquide présentant un taux de formaldéhyde libre inférieur ou égal à 0,1 % en poids total de liquide, un taux de phénol libre inférieur ou égal à 0,5 % en poids total de liquide, et une diluabilité à l'eau, à 20°C, supérieure ou égale à 1000 %, et
- 0 à 40 parts d'urée pour 100 parts en poids sec du mélange constitué par la résine et l'urée,
- un composé apte à réagir avec le formaldéhyde libre choisi dans le groupe constitué de la 2,4-pentanedione, la 2,4-hexanedione, la 3,5-heptanedione, la 2,4-octanedione, l'acétoacétamide, l'acide acétoacétique, le méthylacétoacétate, l'éthylacétoacétate, le n-propylacétoacétate, l'iso-propylacétoacétate, l'iso-butylacétoacétate, le t-butylacétoacétate, le n-hexylacétoacétate, le malonamide, l'acide malonique, le diméthylmalonate, le diéthylmalonate, le di-n-propylmalonate, le di-iso-propylmalonate, le di-n-butyl-malonate , l'acide acétonedicarboxylique et le diméthylacétonedicarboxylate, le 2-méthylcyanoacétate, le 2-éthylcyanoacétate, le 2-n-propylcyanoacétate, le 2-iso-propylcyanoacétate, le 2-n-butylcyanoacétate, le 2-iso-butylcyanoacétate, le 2-ter-butylcyanoacétate, le 2-cyanoacétamide et le propanedinitrile, le triméthylolpropane triacétoacétate, le triméthylolpropane tricyanoacétate, la 1,3-cyclohexanedione et l'acide de Meldrum, la teneur en composé apte à réagir avec le formaldéhyde représente 1 à 35 parts pour 100 parts en poids sec de résine liquide et le cas échéant d'urée.

2. Composition selon la revendication 1, **caractérisée en ce que** la résine présente un taux de formaldéhyde libre inférieur ou égal à 0,1 %, un taux de phénol libre inférieur à 0,4 % et une diluabilité à l'eau, à 20°C, supérieure ou égale à 2000 %.

3. Composition selon l'une des revendications 1 à 2, **caractérisée** en ce la teneur en composé apte à réagir avec le formaldéhyde représente 1 à 30 parts pour 100 parts en poids sec de résine liquide et le cas échéant d'urée.

4. Composition selon l'une des revendications 1 à 3, **caractérisée en ce que** la teneur en composé apte à réagir avec le formaldéhyde est inférieure ou égale à 20 parts en poids sec de résine liquide et le cas échéant d'urée.

5. Composition selon l'une des revendications 1 à 4, **caractérisée en ce que** la teneur en composé apte à réagir avec le formaldéhyde représente 3 à 20 parts pour 100 parts en poids sec de résine liquide et le cas échéant d'urée.

6. Composition selon l'une des revendications 1 à 5, **caractérisée en ce que** la teneur en composé apte à réagir avec le formaldéhyde est inférieure ou égale à 15 parts en poids sec de résine liquide et le cas échéant d'urée.

7. Composition selon l'une des revendications 1 à 6, **caractérisée en ce qu'**elle comprend en outre les additifs suivants, pour 100 parts en poids sec de résine liquide et le cas échéant d'urée :
- 0 à 10 parts d'un catalyseur,
- 0 à 2 parts de silane,
- 0 à 20 parts d'huile,
- 0 à 20 parts d'ammoniaque (solution à 20 % en poids).

8. Composition selon la revendication 7, **caractérisée en ce qu'**elle comprend en outre les additifs suivants, pour 100 parts en poids sec de résine liquide et le cas échéant d'urée :
- 0 à 10 parts de sulfate d'ammonium,
- 0 à 2 parts d'un aminosilane,
- 0 à 20 parts d'huile
- 0 à 20 parts d'ammoniaque (solution à 20 % en poids).

9. Composition selon l'une des revendications 7 à 8, **caractérisée en ce qu'**elle comprend en outre les additifs suivants, pour 100 parts en poids sec de résine liquide et le cas échéant d'urée :
- moins de 7 parts d'un catalyseur,
- 0 à 2 parts de silane,
- 6 à 15 parts d'huile,
- moins de 12 parts d'ammoniaque (solution à 20 % en poids).

10. Composition selon l'une des revendications 1 à 9, **caractérisée en ce que** les fibres minérales sont des fibres de verre ou de roche.

11. Utilisation d'une composition d'encollage selon l'une des revendications 1 à 10 pour la fabrication de produits isolants à base de fibres minérales, notamment de fibres de verre ou de roche.

12. Utilisation selon la revendication 11 **caractérisée en ce que** les fibres minérales sont des fibres de verre ou de roche.

## Patentansprüche

1. Schlichtungszusammensetzung für Mineralfasern, enthaltend:
- ein flüssiges Phenolharz, gebildet aus Kondensaten von Phenolformaldehyd und von Phenolformaldehyd-Monoethanolamin, wobei das flüssige Phenolharz einen Gehalt an freiem Formaldehyd von unter oder gleich 0,1 Gew.-% insgesamt an Flüssigkeit, einen Gehalt an freiem Phenol von unter oder gleich 0,5 Gew.-% insgesamt an Flüssigkeit und eine Verdünnbarkeit in Wasser bei 20 °C von über oder gleich 1000 % aufweist, und
- 0 bis 40 Anteile Harnstoff auf 100 Anteile Trockengewicht des Gemischs, gebildet von dem Harz und von dem Harnstoff,
- eine Verbindung, die imstande ist, mit dem freien Formaldehyd zu reagieren, ausgewählt aus der Gruppe, gebildet von dem 2,4-Pentandion, dem 2,4-Hexandion, dem 3,5-Heptandion, dem 2,4-Octandion, dem Acetoacetamid, der Acetessigsäure, dem Methylacetoacetat, dem Ethylacetoacetat, dem n-Propylacetoacetat, dem Isopropylacetoacetat, dem Isobutylacetoacetat, dem t-Butylacetoacetat, dem n-Hexylacetoacetat, dem Malonamid, der Malonsäure, dem Dimethylmalonat, dem Diethylmalonat, dem Di-n-Propylmalonat, dem Di-iso-Propylmalonate, dem Di-n-Butyl-Malonate, der Acetondicarbonsäure und dem Dimethylacetondicarboxylat, dem 2-Methylcyanoactat, dem 2-Ethylcyanoacetat, dem 2-n-Propylcyanoacetat, dem 2-iso-Propylcyanoacetat, dem 2-n-Butylcyanoacetat, dem 2-iso-Butylcyanoacetat, dem 2-ter-Butylcyanoacetat, dem 2-Cyanoacetamid und dem Propandinitril, dem Trimethylolpropantriacetoacetat, dem Trimethylolpropantricyanoacetat, dem 1,3-Cyclohexandion und der Meldrumsäure, wobei der Gehalt an Verbindung, die imstande ist, mit dem Formaldehyd zu reagieren, 1 bis 35 Anteile auf 100 Anteile Trockengewicht flüssiges Harz und gegebenenfalls Harnstoff aufweist.

2. Zusammensetzung nach Anspruch 1, **dadurch gekennzeichnet, dass** das Harz einen Gehalt an freiem Formaldehyd von unter oder gleich 0,1 %, einen Gehalt an freiem Phenol von unter 0,4 % und eine Verdünnbarkeit in Wasser bei 20 °C von über oder gleich 2000 % aufweist.

3. Zusammensetzung nach einem der Ansprüche 1 bis 2, **dadurch gekennzeichnet, dass** der Gehalt an Verbindung, die imstande ist, mit dem Formaldehyd zu reagieren, 1 bis 30 Anteile auf 100 Anteile Trockengewicht flüssiges Harz und gegebenenfalls Harnstoff darstellt.

4. Zusammensetzung nach einem der Ansprüche 1 bis 3, **dadurch gekennzeichnet, dass** der Gehalt an Verbindung, die imstande ist, mit dem Formaldehyd zu reagieren, unter oder gleich 20 Anteile Trockengewicht flüssiges Harz und gegebenenfalls Harnstoff beträgt.

5. Zusammensetzung nach einem der Ansprüche 1 bis 4, **dadurch gekennzeichnet, dass** der Gehalt an Verbindung, die imstande ist, mit dem Formaldehyd zu reagieren, 3 bis 20 Anteile auf 100 Anteile Trockengewicht flüssiges Harz und gegebenenfalls Harnstoff darstellt.

6. Zusammensetzung nach einem der Ansprüche 1 bis 5, **dadurch gekennzeichnet, dass** der Gehalt an Verbindung, die imstande ist, mit dem Formaldehyd zu reagieren, unter oder gleich 15 Anteile Trockengewicht flüssiges Harz und gegebenenfalls Harnstoff beträgt.

7. Zusammensetzung nach einem der Ansprüche 1 bis 6, **dadurch gekennzeichnet, dass** sie ferner auf 100 Anteile Trockengewicht flüssiges Harz und gegebenenfalls Harnstoff folgende Zusätze umfasst:
- 0 bis 10 Anteile eines Katalysators,
- 0 bis 2 Anteile Silan,
- 0 bis 20 Anteile Öl,
- 0 bis 20 Anteile Ammoniak (Lösung zu 20 Gew.-%).

8. Zusammensetzung nach Anspruch 7, **dadurch gekennzeichnet, dass** sie ferner auf 100 Anteile Trockengewicht flüssiges Harz und gegebenenfalls Harnstoff folgende Zusätze umfasst:
- 0 bis 10 Anteile Ammoniumsulfat,
- 0 bis 2 Anteile eines Aminosilans,
- 0 bis 20 Anteile Öl,
- 0 bis 20 Anteile Ammoniak (Lösung zu 20 Gew.-%).

9. Zusammensetzung nach einem der Ansprüche 7 bis 8, **dadurch gekennzeichnet, dass** sie ferner auf 100 Anteile Trockengewicht flüssiges Harz und gegebenenfalls Harnstoff folgende Zusätze umfasst:
- weniger als 7 Anteile eines Katalysators,
- 0 bis 2 Anteile Silan,
- 6 bis 15 Anteile Öl,
- weniger als 12 Anteile Ammoniak (Lösung zu 20 Gew.-%).

10. Zusammensetzung nach einem der Ansprüche 1 bis 9, **dadurch gekennzeichnet, dass** die Mineralfasern Glas- oder Steinfasern sind.

11. Verwendung einer Schlichtungszusammensetzung nach einem der Ansprüche 1 bis 10 für die Herstellung von Isolationsprodukten auf der Basis von Mineralfasern, insbesondere von Glas- oder Steinfasern.

12. Verwendung nach Anspruch 11, **dadurch gekennzeichnet, dass** die Mineralfasern Glas- oder Steinfasern sind.

## Claims

1. A sizing composition for mineral fibers containing:
- a liquid phenolic resin constituted of phenol-formaldehyde and phenol-formaldehyde-methenanolamine condensates, said phenolic resin having a free formaldehyde content less than or equal to 0.1% by weight expressed with respect to the total weight of liquid, a free phenol content less than or equal to 0.5% by weight expressed with respect to the total weight of liquid, and a water dilutability, at 20°C, greater than or equal to 1000% and
- 0 to 40 parts of urea per 100 parts by dry weight of the mixture constituted by the resin and the urea,
- a compound capable of reacting with the free formaldehyde chosen from the group constituted of 2,4-pentanedione, 2,4-hexanedione, 3,5-heptanedione, 2,4-octanedione, acetoacetamide, acetoacetic acid, methyl acetoacetate, ethyl acetoacetate, n-propyl acetoacetate, isopropyl acetoacetate, isobutyl acetoacetate, t-butyl acetoacetate, n-hexyl acetoacetate, malonamide, malonic acid, dimethyl malonate, diethyl malonate, di-n-propyl malonate, diisopropyl malonate, di-n-butyl malonate, acetonedicarboxylic acid, dimethyl acetonedicarboxylate, 2-methyl cyanoacetate, 2-ethyl cyanoacetate, 2-n-propyl cyanoacetate, 2-isopropyl cyanoacetate, 2-n-butyl cyanoacetate, 2-isobutyl cyanoacetate, 2-tert-butyl cyanoacetate, 2-cyanoacetamide, propanedinitrile, trimethylolpropane triacetoacetate, trimethylolpropane tricyanoacetate, 1,3-cyclohexanedione and Meldrum's acid, the content of the compound capable of reacting with the formaldehyde represents 1 to 35 parts per 100 parts by dry weight of liquid resin and where appropriate of urea.

2. The composition as claimed in claim 1, **characterized in that** the resin has a free formaldehyde content less than or equal to 0.1%, a free phenol content of less than 0.4% and a water dilutability, at 20°C, of 2000% or higher.

3. The composition as claimed in claim 1 or 2, **characterized in that** the content of the compound capable of reacting with the formaldehyde represents 1 to 30 parts per 100 parts by dry weight of liquid resin and where appropriate of urea.

4. The composition as claimed in one of claims 1 to 3, **characterized in that** the content of the compound capable of reacting with the formaldehyde is 20 parts or less by dry weight of liquid resin and where appropriate of urea.

5. The composition as claimed in claim 1 or 4, **characterized in that** the content of the compound capable of reacting with the formaldehyde represents 3 to 20 parts per 100 parts by dry weight of liquid resin and where appropriate of urea.

6. The composition as claimed in one of claims 1 to 5, **characterized in that** the content of the compound capable of reacting with the formaldehyde is 15 parts or less by dry weight of liquid resin and where appropriate of urea.

7. The composition as claimed in one of claims 1 to 6, **characterized in that** it also comprises the following additives, per 100 parts by dry weight of liquid resin and where appropriate of urea:
- 0 to 10 parts of a catalyst,
- 0 to 2 parts of silane,
- 0 to 20 parts of oil,
- 0 to 20 parts of aqueous ammonia (20 wt% solution).

8. The composition as claimed in claim 7, **characterized in that** it also comprises the following additives, per 100 parts by dry weight of liquid resin and where appropriate of urea:
- 0 to 10 parts of ammonium sulfate,
- 0 to 2 parts of aminosilane,
- 0 to 20 parts of oil,
- 0 to 20 parts of aqueous ammonia (20 wt% solution).

9. The composition as claimed in any one of claims 7 or 8, **characterized in that** it also comprises the following additives, per 100 parts by dry weight of liquid resin and where appropriate of urea:
- less than 7 parts of a catalyst,
- 0 to 2 parts of silane,
- 0 to 20 parts of oil, preferably 6 to 15 parts; and
- less than 12 parts of aqueous ammonia (20 wt% solution).

10. The composition as claimed in one of claims 1 to 9, **characterized in that** it the mineral fibers are glass fibers or rock fibers.

11. The use of a sizing composition as claimed in one of claims 1 to 10 for the fabrication of insulating products based on mineral fibers, especially glass fibers or rock fibers.

12. The use according to claim 11 **characterized in that** the mineral fibers are glass fibers or rock fibers.
